# EUROPÄISCHE PATENTSCHRIFT

(11) **EP 1 332 395 B1**
(45) Veröffentlichungstag und Bekanntmachung des Hinweises auf die Patenterteilung: **04.04.2007**
(21) Anmeldenummer: 01988875.9
(22) Anmeldetag: 25.10.2001
(51) Int. Cl.: G02B 6/42

(54) **OPTISCHES SIGNALÜBERTRAGUNGSSYSTEM**
OPTICAL SIGNAL TRANSMISSION SYSTEM
SYSTEME OPTIQUE DE TRANSMISSION DE SIGNAUX

(30) Priorität: 28.10.2000 DE 10053670
(43) Veröffentlichungstag der Anmeldung: 06.08.2003
(73) Patentinhaber: ERNI Management AG, 6052 Hergiswil (CH)
(72) Erfinder: GUTTMANN, Joachim, 89077 Ulm (DE); HUBER, Hans-Peter, 89233 Neu-Ulm (DE); KRUMPHOLZ, Oskar, 89081 Ulm (DE); MOISEL, Jörg, 89231 Neu-Ulm (DE); RODE, Manfred, 89250 Senden (DE)
(74) Vertreter: Jakelski, Joachim
(86) Internationale Anmeldenummer: PCT/EP2001/012355
(87) Internationale Veröffentlichungsnummer: WO 2002/035272

(56) Entgegenhaltungen:
- EP-A- 0 083 527
- US-A- 4 796 969
- US-A- 5 546 487
- US-A- 5 940 564

## Beschreibung

Die Erfindung bezieht sich auf ein optisches Signalübertragungssystem nach dem Oberbegriff des Patentanspruchs 1, wie es z.B. aus US-A-4 796 969 bekannt ist.

Im Bereich der Telekommunikation sind seit einiger Zeit einmodige Glasfaserstrecken eingeführt. Für kurze Strecken, beispielsweise innerhalb von Computergehäusen sind diese aus der Telekommunikation bekannten Technologien zu aufwendig und zu teuer.

Ein für kurze Übertragungsstrecken geeignetes Signalübertragungssystem ist beispielsweise in der Druckschrift DE 44 34 727 C1 beschrieben. Es umfaßt eine lichtleitende Glasplatte als Rückwandplatte mit dazu senkrecht stehenden elektronischen Baugruppen, die über Steckverbindungen auf der Rückwandplatte positioniert sind. In die Steckverbindung sind elektro-optische Übertragungseinheiten integriert, die zur Rückwandplatte senkrecht einfallende Lichtstrahlen abgeben oder empfangen. Die Übertragungseinheiten sind mit der jeweiligen elektronischen Baugruppe über flexible elektrische Leitungen verbunden. Auf der Rückwandplatte auftreffende Lichtstrahlen werden durch Koppelelemente in einem geeigneten Winkel abgelenkt und innerhalb der lichtleitenden Glasplatte mittels Totalreflexion geführt. Die elektro-optischen Übertragungseinheiten werden beispielsweise als eigenständige Subbaugruppen über flexible Halterungen mit den elektronischen Baugruppen verbunden. Diese schwingend gelagerte Halterungen ermöglichen es, die Subbaugruppe innerhalb gewisser Toleranzgrenzen unabhängig von der Position der Baugruppe bezüglich der Rückwandplatte auszurichten.

Ferner geht aus der Druckschrift DE 40 03 056 A 1 eine Signalverbindungsvorrichtung hervor, bei der ein Signalaustausch zwischen einem Sender und Empfänger über einen Lichtwellenleiter durchgeführt wird, der in einer aus mehreren Schichten aufgebauten Rückwandplatte integriert ist. Das Signal wird dem Lichtwellenleiter mit Hilfe einer Abbildungsoptik übertragen. Der Lichtwellenleiter ist hierbei ganzflächig oder beispielsweise streifenförmig nur in den Teilbereichen auf oder in der Rückwandplatte angeordnet, die zur Lichtleitung bestimmt sind. Die Lichtübertragung erfolgt mit Hilfe von Koppelelementen als zusätzliche Maßnahmen zur Strahlformung, um an den Ein- und Auskoppelungsstellen Koppelverluste zwischen dem Lichtwellenleiter und dem optischen Sender oder Empfänger gering zu halten.

Bei den im Stand der Technik beschriebenen Übertragungssystemen sind über Steckverbinderanschlüsse die einschiebbaren Baugruppen zum Ausgleich von Toleranzen an den Trennstellen flexibel angeordnet. Derartige flexible Halterungen sind meist technisch aufwendig und kostspielig. Ohne zusätzliche Vorrichtungen ist jedoch eine genaue Justage der Baugruppen in Bezug auf die Rückwandplatte nicht ohne Lichtleistungsverluste zu bewerkstelligen. Dies gilt insbesondere beim Einkoppeln von Licht in streifenförmige oder faserförmige Wellenleiter. Bereits geringste Montageungenauigkeiten oder Verkippungen, die sich nach mehrfacher Reflexion vervielfachen, können sogar dazu führen, dass keine Lichtübertragung in die Einkoppelstelle mehr zustande kommt.

Der Erfindung liegt die Aufgabe zugrunde, ein einfaches Signalübertragungssystem zur Kopplung von elektronischen Baugruppen mit der Rückwandplatte mit möglichst hohen Toleranzen gegenüber Fehljustage anzugeben.

Die Erfindung wird durch die Merkmale des Patentanspruchs 1 wiedergegeben. Die weiteren Ansprüche enthalten vorteilhafte Aus- und Weiterbildungen der Erfindung.

Die Erfindung beinhaltet ein optisches Signalübertragungssystem für die Übertragung von Daten zwischen elektronischen Baugruppen über eine Rückwandplatte. Es ist insbesondere für einfach lösbare Steckverbindungen geeignet. Das Übertragungssystem besteht aus den optischen Elementen einer Sendeeinrichtung, einem bevorzugt faserförmig ausgebildeten Lichtwellenleiter und einer Empfangseinrichtung sowie mindestens aus einer Trennstelle, an der ein optisches Abbildungssystem für die einfach lösbare Verbindung angeordnet ist. Auf der Bildseite des Abbildungssystems befindet sich die sogenannte Akzeptanzfläche des optischen Elements zur Lichteinkopplung, die beispielsweise durch den Wellenleiterquerschnitt oder die lichtempfindliche Fläche einer Empfangsdiode festgelegt ist. Analog hierzu wird der sogenannte Akzeptanzwinkel beispielsweise durch die numerische Apertur des Wellenleiters festgelegt. Akzeptanzfläche, Akzeptanzwinkel oder beide werden gegenüber der Objektseite um einen durch die von der Positioniertoleranz der Fehljustage der Trennstelle festgelegen Betrag vergrößert. Die Vergrößerung hat zum Ziel, Lichtleistungsverluste zu minimieren.

Bei mehrmodigen Wellenleitern besteht die Möglichkeit, numerische Apertur und Wellenleiterquerschnitt unabhängig voneinander auszuwählen. Wählt man die numerische Apertur und den Querschnitt entsprechend, können sogar Lichtverluste durch Aberration infolge nicht perfekter optischer Abbildungssysteme vermieden werden. Dabei wird an jedem Übergang einer Trennstelle entweder der Wellenleiterquerschnitt oder die numerische Apertur entsprechend der Positioniertoleranz vergrößert.

Als Teil des optischen Abbildungssystems befindet sich auf der Bildseite beispielsweise eine Photodiode als Empfangseinrichtung in Kombination mit einem Wellenleiter, dessen Querschnitt 30 bis 70% der aktiven Photodiodenfläche beträgt. Bevorzugt wird hierzu eine MSM-Photodiode verwendet.
Das optische Abbildungssystems für die Übertragung von Signalen zwischen den Baugruppen der Rückwand beihaltet auf der Objektseite bevorzugt eine Laserdiode mit Vertikalresonator.

Vorteilhafterweise treten keinerlei Leistungsverluste bei Montageungenauigkeiten im Hinblick auf eine laterale Verschiebung oder Verkippung der Komponenten gegeneinander auf. Dies wirkt sich besonders vorteilhaft bei mehrmodigen Wellenleitern aus, bei denen die numerische Apertur und der Wellenleiterquerschnitt unabhängig voneinander gewählt werden kann.

Im folgenden wird die Erfindung anhand von Beispielen unter Bezugnahme auf schematische Zeichnungen in den Figuren näher erläutert. Es zeigen:

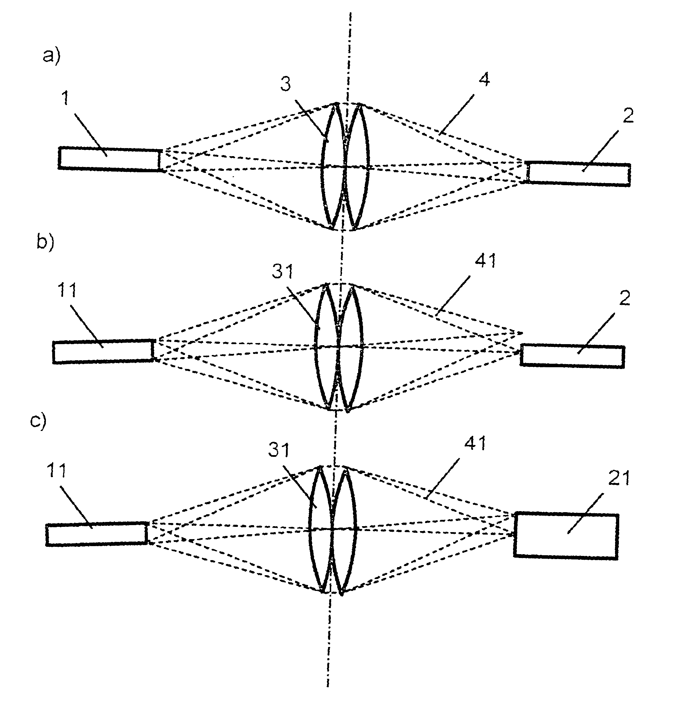

Fig. 1 a) Schematische Darstellung eines idealen Abbildungssystems,
Fig. 1 b) Schematische Darstellung eines verkippten Abbildungssystems,
Fig. 1 c) Schematische Darstellung der erfindungsgemäßen Lösung.

Ein erstes Beispiel gemäß Fig. 1a zeigt, auf welche Weise das Signal auf optischem Wege an den Trennstellen, beispielsweise über Linsen übertragen wird. Das Licht 4 breitet sich von einem Wellenleiter 1 oder Sender aus und wird über ein Linsensystem 3 in den Empfänger oder in einen weiteren Lichtwellenleiter 2 abgebildet. In dem dargestellten Idealfall wird der Lichtstrahl ohne Strahlaufweitung oder lateralem Versatz vom Sender über den Lichtwellenleiter exakt auf den Empfänger abgebildet. In Fig. 1 b sind die Einflüsse auf den Strahlengang 41 eines verkippten Wellenleiters 11 und einer fehlerhaft justierten Linse 31 dargestellt. Der auf der Bildseite auf den Lichtwellenleiter einfallende Lichtstrahl wird lateral ausgelenkt und trifft nicht mehr vollständig auf dessen Akzeptanzfläche. Ein Teil der Lichtleistung geht dabei verloren.
Die erfindungsgemäße Lösung zeigt in Fig. 1 c, wie durch unvermeidbare Fehljustagen das Licht verlustfrei auf der Bildseite weitergeführt werden kann. Der in seinem Durchmesser aufgeweitete Lichtwellenleiter 21 ist genau so bemessen, dass der lateral versetzte Strahl im Rahmen der Fehljustage noch vollständig auf die Akzeptanzfläche auftrifft.
Dies gewährleistet, dass das Licht stets mit minimalen Lichtleistungsverlusten in den Lichtwellenleiter ein- oder ausgekoppelt wird.

In einer speziellen Ausführungsform einer optischen Backplane beginnt man mit einer Laserdiode mit einer runden emittierenden Fläche von ca. 10 µm Durchmesser und einer numerischen Apertur von 0,1. Das Licht wird an der ersten Trennstelle auf einen Wellenleiter der Abmessung 200 X 200 µm mit der numerischen Apertur von 0,3 abgebildet. An der zweiten Trennstelle trifft das Licht aus dem Wellenleiter auf eine runde Photodiode mit 400 µm Durchmesser und einem Winkel von ca. 60° (entsprechend einer numerischen Apertur von ca. 0.8).

## Patentansprüche

1. Trennbares optisches Signalübertragungssystem, bestehend aus einer Sendeeinrichtung, einer Empfangseinrichtung, wenigstens einer Trennstelle sowie einem optischen Abbildungssystem aus Linsen mit einer Bildseite des Abbildungssystems, welche der Empfangseinrichtung zugewandt ist, und einer Objektseite des Abbildungssystems, welche der Sendeeinrichtung zugewandt ist, wobei die Trennstelle zwischen der Sendeeinrichtung und der Empfangseinrichtung angeordnet ist,
**dadurch gekennzeichnet,**
**dass** das optische Abbildungssystem von der Sendeeinrichtung bzw. der Empfangseinrichtung abgesetzt ausgebildet ist und
**dass** auf der Bildseite des Abbildungssystems die Akzeptanzfläche der Empfangseinrichtung und/oder der Akzeptanzwinkel der Empfangseinrichtung gegenüber der Objektseite um einen durch die von der Positioniertoleranz der Trennstelle festgelegten Betrag vergrößert ist, um Lichtleistungsverluste zu minimieren.

2. Trennbares Signalübertragungssystem nach Anspruch 1, **dadurch gekennzeichnet, dass** die Sendeeinrichtung durch einen Wellenleiter, welcher Licht abgibt, oder durch eine Laserdiode mit Vertikalresonator gebildet ist.

3. Trennbares Signalübertragungssystem nach Anspruch 1 oder 2, **dadurch gekennzeichnet, dass** die Empfangseinrichtung einen Lichtwellenleiter, welcher Licht aufnimmt, oder eine Photodiode darstellt.

4. Trennbares Signälübertragungssystem nach Anspruch 3 **dadurch gekennzeichnet, dass** als Empfangseinrichtung eine MSM-Diode angeordnet ist.

5. Trennbares Signalübertragungssystem nach Anspruch 2 und 3, **dadurch gekennzeichnet, dass** die Sendeeinrichtung durch einen Wellenleiter gebildet wird und dessen Wellenleiterquerschnitt auf der Objektseite 30 bis 70% der aktiven Photodiodenfläche auf der Bildseite beträgt.

## Claims

1. Separable optical signal transmission system, comprising a transmission device, a reception device, at least one separation point and an optical imaging system comprising lenses with an image side of the imaging system which faces the reception device and with an object side of the imaging system which faces the transmission device, with the separation point being arranged between the transmission device and the reception device,
**characterized**
**in that** the optical imaging system is formed separately from the transmission device and/or the reception device, and
**in that**, on the image side of the imaging system, the acceptance area of the reception device and/or the acceptance angle of the reception device are/is enlarged in comparison to the object side by an amount which is governed by the positioning tolerance of the separation point, in order to minminimize light power losses.

2. Separable signal transmission system according to Claim 1, **characterized in that** the transmission device is formed by a waveguide which emits light, or by a laser diode with a vertical resonator.

3. Separable signal transmission system according to Claim 1 or 2, **characerized** in that the reception device represents an optical waveguide which receives light, or a photodiode.

4. Separable signal transmission system according to Claim 3, **characterized in that** an MSM diode is arranged as the reception device.

5. Separable signal transmission system according to Claims 2 and 3, **characterized in that** the transmisison device is formed by a waveguide, and its waveguide cross section on the object side is 30 to 70% of the active photodiode area on the image side.

## Revendications

1. Système de transmission de signaux optiques séparable, constitué d'un dispositif d'émission, d'un dispositif de réception, d'au moins un point de séparation, ainsi que d'un système de reproduction d'images optique constitué de lentilles, dont un côté image du système de reproduction d'images est tourné vers le dispositif de réception, et dont un côté objet du système de reproduction d'images est tourné vers le dispositif d'émission, le point de séparation étant disposé entre le dispositif d'émission et le dispositif de réception,
**caractérisé en ce qu'**
on décale le système de reproduction d'images optique par rapport au dispositif d'émission ou de réception, et
par rapport au côté objet on agrandit du côté image du système de reproduction d'images, la surface d'acceptance et/ou l'angle d'acceptance du dispositif de réception d'une valeur définie par la tolérance de positionnement du point de séparation, pour réduire au minimum les pertes de puissance lumineuse.

2. Système de transmission de signaux séparable selon la revendication 1,
**caractérisé en ce que**
le dispositif d'émission est constitué d'un guide d'ondes, qui émet de la lumière, ou d'une diode laser avec résonateur vertical.

3. Système de transmission de signaux séparable selon la revendication 1 ou la revendication 2,
**caractérisé en ce que**
le dispositif de réception constitue un guide d'ondes lumineuses qui absorbe de la lumière, ou une photodiode.

4. Système de transmission de signaux séparable selon la revendication 3,
**caractérisé en ce qu'**
une diode MSM sert de dispositif de réception.

5. Système de transmission de signaux séparable selon la revendication 2 et la revendication 3,
**caractérisé en ce que**
le dispositif d'émission est un guide d'ondes dont la section de guide d'ondes côté objet vaut 30 à 70 % de la surface active de photodiode du côté image.
